# EUROPEAN PATENT APPLICATION

(11) **EP 4 787 530 A1**
(43) Date of publication of application: **05.08.2026**
(21) Application number: 24855081.6
(22) Date of filing: 15.07.2024
(51) Int. Cl.: H01M 10/058, H01M 10/052

(54) **GAS CIRCULATION DEVICE, AND BATTERY STANDING APPARATUS**

(30) Priority: 28.09.2023 CN 202322663119 U
(71) Applicant: Wuxi Lead Intelligent Equipment Co., Ltd., Wuxi, Jiangsu 214028 (CN)
(72) Inventor: HUANG, Liqiang, Wuxi, Jiangsu 214028 (CN); ZHOU, Yang, Wuxi, Jiangsu 214028 (CN)
(74) Representative: Rau, Schneck & Hübner Patentanwälte Rechtsanwälte PartGmbB
(86) International application number: PCT/CN2024/105409
(87) International publication number: WO 2025/066428

(57) **Abstract**

The present disclosure relates to a gas circulation device and a battery quiescence apparatus, including a first gas conveying assembly, a second gas conveying assembly, and an intake assembly. Working gas can be charged into the first gas storage tank and the second gas storage tank through the intake assembly, forming a pressure difference between the first gas storage tank and the second gas storage tank. When the first gas conveying assembly is opened, working gas in the first gas storage tank is conveyed to the quiescent chamber; when the first gas conveying assembly is closed and the second gas conveying assembly is opened, working gas in the second gas storage tank continues to be conveyed to the quiescent chamber until pressure in the quiescent chamber reaches a threshold. After pressure stabilization is completed, the first gas conveying assembly is opened first, and working gas in the quiescent chamber flows back into the first gas storage tank; when pressure in the quiescent chamber drops to a predetermined value, an exhaust valve is opened to empty the quiescent chamber. It can be seen that part of the working gas in the quiescent chamber can be recovered by the first gas storage tank and reused, thereby effectively reducing production costs. (Fig. 2)

## Description

### CROSS-REFERENCE TO RELATED APPLICATIONS

The present disclosure claims priority to Chinese Patent Application No. 202322663119.4 filed with the China National Intellectual Property Administration (CNIPA) on September 28, 2023 and entitled "gas circulation device and battery quiescence apparatus", which is hereby incorporated by reference in its entirety.

### TECHNICAL FIELD

The present disclosure relates to the technical field of lithium battery devices, particularly to a gas circulation device and a battery quiescence apparatus.

### BACKGROUND

After electrolyte injection, due to the inability of the electrolyte to quickly penetrate into the cell, the battery needs to be placed in a quiescent chamber for quiescence. During quiescence, the quiescent chamber is generally evacuated to remove residual air from the cell layers, and then nitrogen is introduced to create positive pressure in the quiescent chamber, allowing the electrolyte to penetrate into the cell under pressure.

Currently, nitrogen is typically directly supplied from a gas source into the quiescent chamber until the pressure in the quiescent chamber reaches a threshold; after a pressure retention for a predetermined time, the exhaust valve is opened to discharge the nitrogen, returning the quiescent chamber to atmospheric pressure. This results in wastage of nitrogen, leading to higher production costs for batteries.

### SUMMARY

Based on this, it is necessary to address the above problems by providing a gas circulation device and a battery quiescence apparatus capable of reducing production costs.

A gas circulation device, including a first gas conveying assembly, a second gas conveying assembly, and an intake assembly; the first gas conveying assembly includes a first gas storage tank, and the second gas conveying assembly includes a second gas storage tank; the intake assembly is configured to connect the first gas storage tank and the second gas storage tank respectively to a gas source, and the intake assembly includes a pressure regulation structure and can make gas pressure in the first gas storage tank lower than that in the second gas storage tank under regulation of the pressure regulation structure;

wherein the first gas conveying assembly and the second gas conveying assembly are configured to connect to a quiescent chamber and convey a working gas into the quiescent chamber until pressure within the quiescent chamber reaches a threshold; and when the quiescent chamber is depressurizing, the first gas conveying assembly is opened to allow the working gas within the quiescent chamber to flow back into the first gas storage tank.

In one embodiment, there are provided a plurality of the first gas conveying assemblies, and under regulation of the pressure regulation structure, gas pressures in the first gas storage tanks of the plurality of first gas conveying assemblies can be sequentially increased or decreased.

In one embodiment, the first gas conveying assembly further includes a first pipe and a first gas joint connected to the first gas storage tank through the first pipe, and the second gas conveying assembly further includes a second pipe and a second gas joint connected to the second gas storage tank through the second pipe.

In one embodiment, there are provided a plurality of first gas joints on the first pipe, and there are provided a plurality of second gas joints on the second pipe.

In one embodiment, the first pipe includes a plurality of first branch pipes arranged parallel to one another, and there are provided a plurality of first gas joints spaced apart on each of the first branch pipes, and the second pipe includes a plurality of second branch pipes arranged parallel to one another, and there are provided a plurality of second gas joints spaced apart on each of the second branch pipes.

In one embodiment, the first gas joint and the second gas joint are provided as quick joints.

In one embodiment, the first gas conveying assembly further includes a first filter provided between the first gas storage tank and the first gas joint, and the second gas conveying assembly further includes a second filter provided between the second gas storage tank and the second gas joint.

In one embodiment, the intake assembly is provided with a quick-plug type flange at its intake end and is connected to a gas source via the quick-plug type flange.

In one embodiment, the intake assembly includes a first intake pipe connected to the first gas storage tank and a second intake pipe connected to the second gas storage tank, and the pressure regulation structure is a pressure relief valve provided on the first intake pipe.

In one embodiment, the intake assembly includes a first intake pipe connected to the first gas storage tank and a second intake pipe connected to the second gas storage tank, and the pressure regulation structure is a pressure booster valve provided on the second intake pipe.

A battery quiescence device, including:
- the gas circulation device according to any one of the preferred embodiments; and
- a quiescent chamber, where the first gas conveying assembly and the second gas conveying assembly are both connected to the quiescent chamber.

The above gas circulation device and battery quiescence apparatus enable working gas from the gas source to be charged into the first gas storage tank and the second gas storage tank through the intake assembly, forming a pressure difference between the first gas storage tank and the second gas storage tank. When the first gas conveying assembly is opened, the working gas in the first gas storage tank is conveyed to the quiescent chamber; when the first gas conveying assembly is closed and the second gas conveying assembly is opened, the working gas in the second gas storage tank continues to be conveyed to the quiescent chamber until the pressure in the quiescent chamber reaches a threshold. After pressure stabilization is completed, the first gas conveying assembly is opened first, and working gas in the quiescent chamber flows back into the first gas storage tank; when pressure in the quiescent chamber drops to a predetermined value, an exhaust valve is opened to empty the quiescent chamber. It can be seen that part of the working gas in the quiescent chamber can be recovered by the first gas storage tank and reused, thereby effectively reducing production costs.

### BRIEF DESCRIPTION OF THE DRAWINGS

To more clearly illustrate the technical solutions in the embodiments of the present disclosure or in the prior art, the following is a brief introduction to the drawings used in the description of the embodiments or the prior art. It should be obvious that the drawings described below are merely some of the embodiments of the present disclosure, and those skilled in the art can obtain other drawings based on these drawings without creative effort.
Fig. 1 is a front view of a gas circulation device in a preferred embodiment of the present disclosure;
Fig. 2 is a top view of the gas circulation device shown in Fig. 1;
Fig. 3 is a left-side view of the gas circulation device shown in Fig. 1;
Fig. 4 is a schematic diagram of a battery quiescence apparatus in another embodiment of the present disclosure.

### DETAILED DESCRIPTION

To make the above objectives, features, and advantages of the present disclosure more apparent and understandable, the following detailed description is provided in conjunction with the accompanying drawings. Many specific details are set forth in the following description in order to provide a thorough understanding of the present disclosure. However, the present disclosure may be practiced in many different ways apart from those described herein, and those skilled in the art can make similar improvements without departing from the spirit of the present disclosure. Therefore, the present disclosure is not limited to the specific embodiments disclosed below.

In the description of the present invention, it needs to be understood that terms such as "center," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial," "circumferential," etc., which indicate orientation or positional relationships, are based on the orientation or positional relationships shown in the drawings. They are used solely for the convenience of describing the present invention and simplifying the description, and should not be construed as indicating or implying that the device or component must have a specific orientation, or be constructed and operated in a specific orientation. Therefore, they cannot be understood as limitations on the present invention.

Furthermore, terms such as "first" and "second" are used only for descriptive purposes and should not be understood as indicating or implying relative importance or implicitly specifying the number of features indicated. Thus, a feature defined by "first" or "second" may explicitly or implicitly include one or more of that feature. In the description of the present disclosure, "multiple" means at least two, for example, two, three, etc., unless otherwise specified.

In the present disclosure, unless otherwise expressly specified and limited, terms such as "installed," "connected," "coupled," "fixed," etc., should be broadly interpreted. For example, they can refer to fixed connections, detachable connections, or integral connections; mechanical connections, electrical connections; direct connections, or indirect connections through an intermediate element; internal connections between elements or interactions between two elements, unless otherwise specifically limited. Those skilled in the art can understand the specific meanings of these terms in the present disclosure according to specific circumstances.

In the present disclosure, unless otherwise expressly specified and limited, when the first feature is "on" or "under" the second feature, it can refer to direct contact between the first and second features, or the first and second features being connected indirectly through an intermediate element. Moreover, when the first feature is "above," "over," or "on top of" the second feature, it can mean that the first feature is directly above or diagonally above the second feature, or simply indicate that the horizontal height of the first feature is higher than that of the second feature. When the first feature is "below," "under," or "underneath" the second feature, it can mean that the first feature is directly below or diagonally below the second feature, or simply indicate that the horizontal height of the first feature is less than that of the second feature.

It should be noted that when an element is referred to as "fixed to" or "provided on" another element, it can be directly on the other element or there can be an intermediate element. When one element is considered to be "connected" to another element, it can be directly connected to the other element or there can be an intermediate element simultaneously. The terms "vertical," "horizontal," "upper," "lower," "left," "right," and similar expressions are used herein for illustrative purposes only and do not indicate the only implementation.

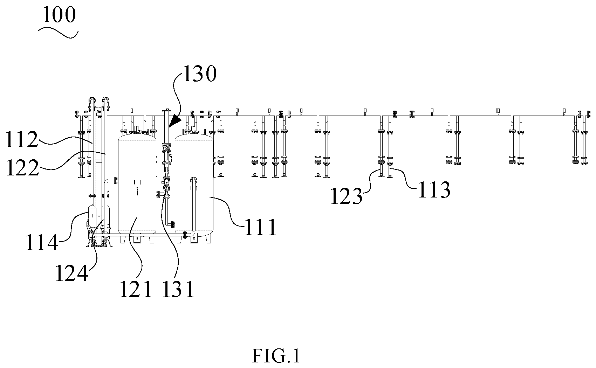

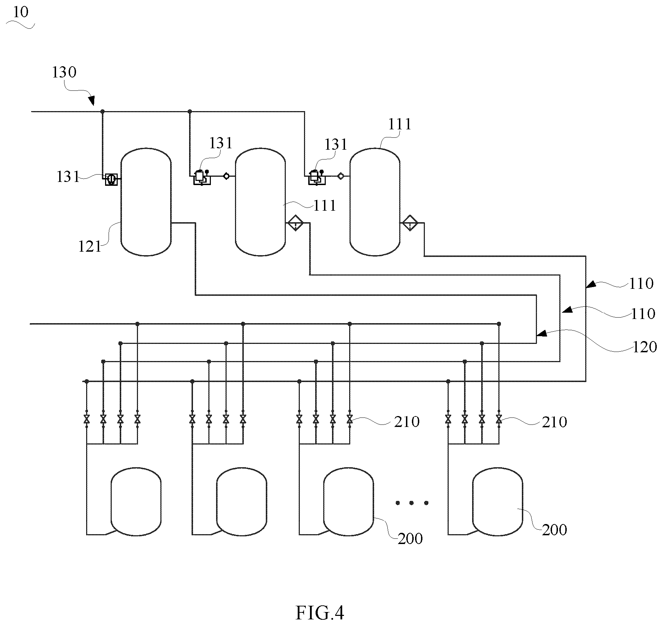

Please refer to Fig. 1 and Fig. 4, the present disclosure provides a gas circulation device 100 and a battery quiescence device 10. Here, the above-mentioned battery quiescence device 10 includes a quiescent chamber 200 and a gas circulation device 100.

The interior of the quiescent chamber 200 forms an accommodation space, capable of forming positive pressure after being charged with working gas. After electrolyte injection, the battery can be placed in the quiescent chamber 200 for pressure retention, allowing the electrolyte to fully saturate the cell. Generally, several intake valves are arranged on the quiescent chamber 200, through which working gas can be introduced into the quiescent chamber 200. The working gas is typically nitrogen, but other inert gases that do not easily undergo oxidation reactions may also be used. In addition, the quiescent chamber 200 is generally provided with an exhaust assembly, on which an exhaust valve 210 is arranged; by opening the exhaust valve 210, the working gas within the quiescent chamber 200 can be discharged.

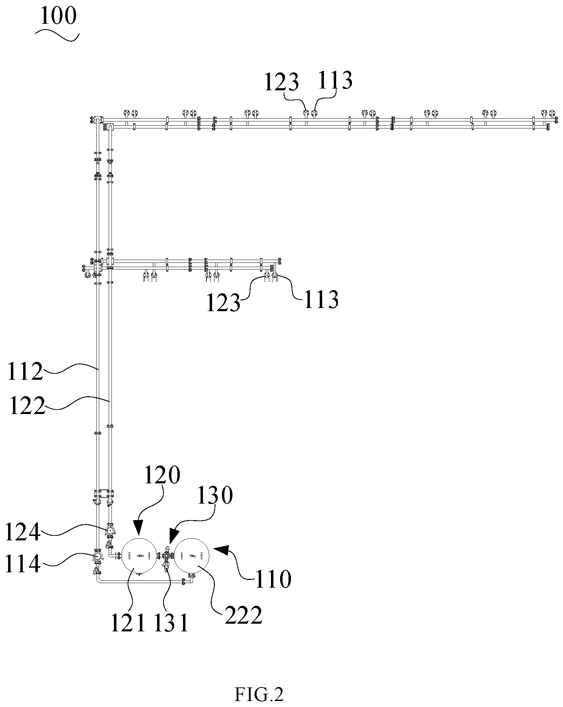

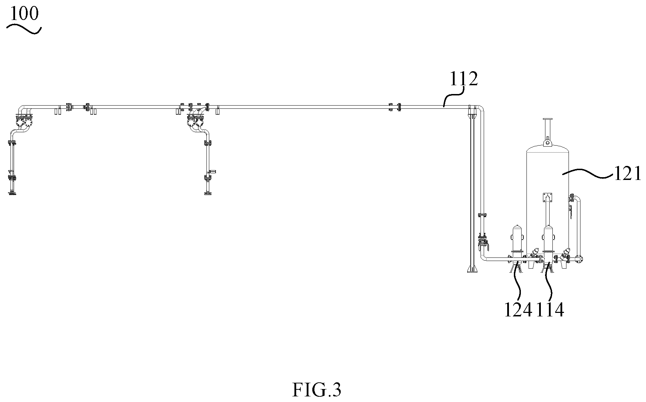

Please also refer to Figures 2 and 3. In a preferred embodiment of the present invention, the gas circulation device 100 comprises a first gas conveying assembly 110, a second gas conveying assembly 120, and an intake assembly 130.

Both the first gas conveying assembly 110 and the second gas conveying assembly 120 are connected to the quiescent chamber 200. Specifically, the first gas conveying assembly 110 and the second gas conveying assembly 120 can be connected to the quiescent chamber 200 via intake valves arranged on the quiescent chamber, and these intake valves can control opening and closing of the first gas conveying assembly 110 and the second gas conveying assembly 120. Obviously, in other embodiments, control valves can also be separately arranged on the first gas conveying assembly 110 and the second gas conveying assembly 120 to achieve control of their opening and closing.

Here, the first gas conveying assembly 110 includes a first gas storage tank 111, and the second gas conveying assembly 120 includes a second gas storage tank 121. When the first gas conveying assembly 110 and the second gas conveying assembly 120 are opened, the working gas stored in the first gas storage tank 111 and the second gas storage tank 121 can be charged into the quiescent chamber 200, thereby forming positive pressure inside the quiescent chamber 200. The structure of the first gas storage tank 111 and that of the second gas storage tank 121 can be the same, generally cylindrical and formed from metal, with strong pressure resistance. To protect the first gas storage tank 111 and the second gas storage tank 121 from explosion caused by external impacts, the gas circulation device 100 usually also includes a casing (not shown in the figures) that envelopes the outer periphery of the first gas storage tank 111 and the second gas storage tank 121; this casing is generally made by welding metal materials.

Specifically in this embodiment, the first gas conveying assembly 110 further includes a first pipe 112 and a first gas joint 113 connected to the first gas storage tank 111 via the first pipe 112. The second gas conveying assembly 120 further includes a second pipe 122 and a second gas joint 123 connected to the second gas storage tank 121 via the second pipe 122.

The first gas joint 113 and the second gas joint 123 facilitate the connection of the first gas conveying assembly 110 and the second gas conveying assembly 120 with the intake valves on the quiescent chamber 200, ensuring reliable connections. The first pipe 112 and the second pipe 122 can both be flexible hoses or rigid pipes formed from metal, and can be provided according to the distribution of the quiescent chamber 200, making it convenient to layout the above-mentioned battery quiescence apparatus.

To facilitate the disassembly and assembly of the first gas conveying assembly 110 and the second gas conveying assembly 120, specifically in this embodiment, the first gas joint 113 and the second gas joint 123 are provided as quick joints. Clearly, if disassembly is not a consideration, the output ends of the first gas conveying assembly 110 and the second gas conveying assembly 120 can also be directly welded to the quiescent chamber 200.

In addition, in this embodiment, multiple first gas joints 113 are provided on the first pipe 112, and multiple second gas joints 123 are provided on the second pipe 122.

Correspondingly, there can also be provided multiple quiescent chambers 200, and each of the multiple quiescent chambers 200 can be connected to the first gas conveying assembly 110 and the second gas conveying assembly 120 via multiple first gas joints 113 and second gas joints 123, respectively. Therefore, the multiple quiescent chambers 200 can simultaneously form positive pressures. As a result, the above-mentioned battery quiescence apparatus can achieve the quiescence of more batteries in one time, thus helping to improve production efficiency.

Further, in this embodiment, the first pipe 112 includes multiple first branch pipes (not labeled in the figure) that are parallel to each other, and on each of the first branch pipes there are provided multiple first gas joints 113 spaced apart. The second pipe 122 includes multiple second branch pipes (not labeled in the figure) that are parallel to each other, and on each of the second branch pipes there are provided multiple second gas joints 123 spaced apart.

Specifically, the second branch pipes are also parallel to the first branch pipes, and the parallel arrangement of the first and second branch pipes reduces pipe crossover and effectively avoids interference between them. Each second branch pipe is positioned close to a corresponding first branch pipe, and beneath each first branch pipe, multiple quiescent chambers 200 can be provided. These multiple quiescent chambers 200 correspond to and connect with the multiple first gas joints 113 on the first branch pipe and the multiple second gas joints 123 on the second branch pipe. It can be seen that the multiple quiescent chambers 200 will also be arranged in multiple parallel rows, which makes the layout of the battery quiescence apparatus cleaner and more organized.

The intake assembly 130 is used to connect the first gas reservoir 111 and the second gas reservoir 121 to a gas source. The working gas stored or generated in the gas source can be injected into the first gas reservoir 111 and the second gas reservoir 121 through the intake assembly 130 for temporary storage. The gas source can be a gas tank that stores working gas or a device that produces working gas. Specifically, in this embodiment, the intake end of the intake assembly 130 is provided with a quick-plug type flange (not shown in the figure), and it is connected to the gas source through the quick-plug type flange. The outlet end of the gas source is equipped with a flange that corresponds and mates with the quick-plug type flange, allowing for rapid disassembly and assembly of the intake assembly 130 and the gas source, which helps to improve operational efficiency.

Here, the intake assembly 130 includes a pressure regulation structure 131, and under the regulation of the pressure regulation structure 131, the pressure within the first gas storage tank 111 can be made lower than that in the second gas storage tank 121.

Specifically, in this embodiment, the intake assembly 130 provides a first intake pipe (not labeled in the figure) connected to the first gas storage tank 111 and a second intake pipe (not labeled in the figure) connected to the second gas storage tank 121, where the pressure regulation structure 131 is a pressure relief valve provided on the first intake pipe. The intake assembly 130 charges both the first gas storage tank 111 and the second gas storage tank 121 with gas via the first intake pipe and the second intake pipe respectively, and the pressure relief valve provided on the first intake pipe can reduce the pressure of the gas having entered the first gas storage tank 111, thus making the pressure within the first gas storage tank 111 lower than that in the second gas storage tank 121.

It should be noted that, in other embodiments, the pressure regulation structure 131 can also be a pressure booster valve provided on the second intake pipe. A pressure booster valve provided on the second intake pipe can increase the pressure of the gas entering the second gas storage tank 121, thus making the pressure within the second gas storage tank 121 higher than that in the first gas storage tank 111. Alternatively, the pressure regulation structure 131 can include both a pressure booster valve provided on the second intake pipe and a pressure relief valve provided on the first intake pipe.

In this embodiment, only one first gas conveying assembly 110 is provided. When a positive pressure needs to be formed within the quiescent chamber 200, the first gas conveying assembly 110 and the second gas conveying assembly 120 are initially kept closed. The working gas from the gas source is first charged into the first gas storage tank 111 and the second gas storage tank 121 through the intake assembly 130, and the pressure regulation structure 131 regulates to create a pressure difference between the first gas storage tank 111 and the second gas storage tank 121. Then, the first gas conveying assembly 110 is opened to allow the working gas within the first gas storage tank 111 to be conveyed to the quiescent chamber 200 under the effect of the pressure difference, until the first gas storage tank 111 and the quiescent chamber 200 reach pressure equilibrium or the pressure difference therebetween is less than a preset value. The first gas conveying assembly 110 is then closed and the second gas conveying assembly 120 is opened, allowing the working gas within the second gas storage tank 121 to be conveyed to the quiescent chamber 200 under the effect of the pressure difference, until the pressure within the quiescent chamber 200 reaches a threshold, and then the second gas conveying assembly 120 is closed. It should be noted that when the pressure within the quiescent chamber 200 reaches the threshold, the pressure within the second gas storage tank 121 can be higher than that within the quiescent chamber 200.

After the quiescent chamber 200 undergoes pressure retention for a predetermined time and needs pressure relieving, the first gas conveying assembly 110 is opened first. At this point, the pressure within the quiescent chamber 200 is higher than the pressure within the first gas storage tank 111, and the working gas within the quiescent chamber 200 flows back into the first gas storage tank 111 under the effect of the pressure difference, until the first gas storage tank 111 and the quiescent chamber 200 reach pressure equilibrium or the pressure within the quiescent chamber 200 reaches a preset value. It can be seen that part of the working gas within the quiescent chamber 200 can be recovered by the first gas storage tank 111. Finally, the first gas conveying assembly 110 is closed and an exhaust valve 210 of the quiescent chamber 200 is opened, allowing the remaining working gas within the quiescent chamber 200 to be emptied.

When preparing the next batch of batteries for quiescence, the above process is repeated, and the working gas recovered by the first gas storage tank 111 can again be injected into the quiescent chamber 200 to achieve recycling. It can be seen that the above gas circulation device 100 can achieve the recovery and recycling of the working gas, reducing wastage of the working gas.

In addition, in this embodiment, the first gas conveying assembly 110 further includes a first filter 114 provided between the first gas storage tank 111 and the first gas joint 113, and the second gas conveying assembly 120 further includes a second filter 124 provided between the second gas storage tank 121 and the second gas joint 123.

The first filter 114 and the second filter 124 can filter the working gas flowing by. Here, the first filter 114 and the second filter 124 can filter the working gas flowing toward the quiescent chamber 200, thus maintaining a clean environment within the quiescent chamber 200. In addition, the first filter 114 can also filter the working gas flowing back from the quiescent chamber 200 to the first gas storage tank 111, preventing contamination of the first gas storage tank 111 and the working gas temporarily stored therein.

Please refer to Fig. 4. In another embodiment, multiple first gas conveying assemblies 110 are provided, and under the regulation of the pressure regulation structure 131, the pressures within the first gas storage tanks 111 of the multiple first gas conveying assemblies 110 can sequentially increase or decrease. The multiple first gas conveying assemblies 110 can be connected respectively to the quiescent chamber 200, and the structure of the first gas conveying assembly 110 in this embodiment can be completely identical to that of the first gas conveying assembly 110 in the previous embodiment.

When a positive pressure needs to be formed within the quiescent chamber 200, the second gas conveying assembly 120 and multiple first gas conveying assemblies 110 are initially kept closed. The working gas from the gas source is first charged into the second gas storage tank 121 and multiple first gas storage tanks 111 through the intake assembly 130, and the pressure regulation structure 131 regulates to create a pressure difference between the first gas storage tanks 111 and the second gas storage tank 121, and also among the multiple first gas storage tanks 111. Then, the first gas conveying assembly 110 with the lowest pressure in the first gas storage tank 111 is opened, allowing the working gas within that first gas storage tank 111 to be conveyed to the quiescent chamber 200 under the effect of the pressure difference, until that first gas storage tank 111 and the quiescent chamber 200 reach pressure equilibrium or the pressure difference therebetween is less than a preset value. Then, the first gas conveying assembly 110 with the second-lowest pressure in the first gas storage tank 111 is opened, allowing the working gas within that first gas storage tank 111 to be conveyed to the quiescent chamber 200 under the effect of the pressure difference, until that first gas storage tank 111 and the quiescent chamber 200 reach pressure equilibrium or the pressure difference therebetween is less than a preset value. This continues until the first gas conveying assembly 110 with the highest pressure in the first gas storage tank 111 is opened, and that first gas storage tank 111 and the quiescent chamber 200 reaches pressure equilibrium or the pressure difference therebetween is less than a preset value.

Then, all the first gas conveying assemblies 110 are closed and the second gas conveying assembly 120 is opened, allowing the working gas within the second gas storage tank 121 to be conveyed to the quiescent chamber 200 under the effect of the pressure difference, until the pressure within the quiescent chamber 200 reaches a threshold, and then the second gas conveying assembly 120 is closed. At this point, the pressure within the quiescent chamber 200 is higher than the pressure within all the first gas storage tanks 111.

After the quiescent chamber 200 undergoes pressure retention for a preset time and needs pressure relieving, the first gas conveying assembly 110 with the highest pressure in the first gas storage tank 111 is opened first. At this point, the pressure within the quiescent chamber 200 is higher than the pressure within the first gas storage tank 111, and the working gas within the quiescent chamber 200 flows back into the first gas storage tank 111 under the effect of the pressure difference, until the pressures reach equilibrium or the pressure difference is less than a preset value. Next, the first gas conveying assembly 110 with the second-highest pressure in the first gas storage tank 111 is opened, since the pressure within the quiescent chamber 200 is still higher than the pressure within the first gas storage tank 111, the working gas within the quiescent chamber 200 flows back into that first gas storage tank 111 under the effect of the pressure difference, until the first gas storage tank 111 and the quiescent chamber 200 again reach pressure equilibrium or the pressure difference therebetween is less than a preset value. This continues until the first gas conveying assembly 110 with the lowest pressure in the first gas storage tank 111 is opened, and the first gas storage tank 111 and the quiescent chamber 200 reach pressure equilibrium or the pressure within the quiescent chamber 200 reaches a preset value.

It can be seen that part of the working gas within the quiescent chamber 200 can be recovered by multiple first gas storage tanks 111. Finally, the first gas conveying assembly 110 is closed and an exhaust valve 210 of the quiescent chamber 200 is opened, allowing the remaining working gas within the quiescent chamber 200 to be emptied.

When preparing the next batch of batteries for quiescence, the above process is repeated, and the working gas recovered by the first gas storage tank 111 can again be injected into the quiescent chamber 200 to achieve recycling. Moreover, since the working gas within the quiescent chamber 200 is recovered through multiple stages using multiple first gas conveying assemblies 110, the amount of residual working gas within the quiescent chamber 200 after each cycle becomes extremely small, and thus the above gas circulation device 100 can further reduce the wastage of the working gas.

The aforementioned gas circulation device 100 and battery quiescence apparatus allow the working gas from the gas source to be charged into the first gas storage tank 111 and the second gas storage tank 121 through the intake assembly 130, creating a pressure difference between the first gas storage tank 111 and the second gas storage tank 121. Opening the first gas conveying assembly 110 allows the working gas within the first gas storage tank 111 to be conveyed to the quiescent chamber 200; closing the first gas conveying assembly 110 and opening the second gas conveying assembly 120 allows the working gas within the second gas storage tank 121 to continue being conveyed to the quiescent chamber 200, until the pressure within the quiescent chamber 200 reaches a threshold. After completing the pressure retention, the first gas conveying assembly 110 is opened first, allowing the working gas within the quiescent chamber 200 to flow back into the first gas storage tank 111; when the pressure within the quiescent chamber 200 drops to a preset value, an exhaust valve can be opened to empty the quiescent chamber 200. It can be seen that part of the working gas within the quiescent chamber 200 can be recovered by the first gas storage tank 111 and reused, thereby effectively reducing production costs.

All the technical features of the above-described embodiments can be combined arbitrarily. To make the description concise, not all possible combinations of these technical features in the above embodiments are described. However, as long as there is no contradiction in combinations of these technical features, they should be considered within the scope of this specification.

The above-described embodiments merely express several implementation methods of the present disclosure with relative specific and detailed descriptions thereto, however, they should not be understood as limiting the scope of the patent for the invention. It should be noted that, for those of ordinary skills in the art, various modifications and improvements can be made without departing from the concept of the present disclosure, and these all fall within the protection scope of the present disclosure. Therefore, the protection scope of the present disclosure should be determined according to the appended claims.

## Claims

1. A gas circulation device, **characterized by** comprising a first gas conveying assembly, a second gas conveying assembly, and an intake assembly;
the first gas conveying assembly comprises a first gas storage tank, and the second gas conveying assembly comprises a second gas storage tank;
the intake assembly is configured to connect the first gas storage tank and the second gas storage tank respectively to a gas source, and the intake assembly comprises a pressure regulation structure and can make gas pressure in the first gas storage tank lower than that in the second gas storage tank under regulation of the pressure regulation structure;
wherein the first gas conveying assembly and the second gas conveying assembly are configured to connect to a quiescent chamber and convey a working gas into the quiescent chamber until pressure within the quiescent chamber reaches a threshold; and when the quiescent chamber is depressurizing, the first gas conveying assembly opens to allow the working gas within the quiescent chamber to flow back into the first gas storage tank.

2. The gas circulation device according to claim 1, **characterized in that** there are provided a plurality of the first gas conveying assemblies, and under regulation of the pressure regulation structure, gas pressures in the first gas storage tanks of the plurality of first gas conveying assemblies can be sequentially increased or decreased.

3. The gas circulation device according to claim 1, **characterized in that** the first gas conveying assembly further comprises a first pipe and a first gas joint connected to the first gas storage tank through the first pipe, and the second gas conveying assembly further comprises a second pipe and a second gas joint connected to the second gas storage tank through the second pipe.

4. The gas circulation device according to claim 3, **characterized in that** there are provided a plurality of first gas joints on the first pipe, and there are provided a plurality of second gas joints on the second pipe.

5. The gas circulation device according to claim 4, **characterized in that** the first pipe comprises a plurality of first branch pipes arranged parallel to one another, and there are provided a plurality of first gas joints spaced apart on each of the first branch pipes, and the second pipe comprises a plurality of second branch pipes arranged parallel to one another, and there are provided a plurality of second gas joints spaced apart on each of the second branch pipes.

6. The gas circulation device according to claim 3, **characterized in that** the first gas joint and the second gas joint are provided as quick joints.

7. The gas circulation device according to claim 3, **characterized in that** the first gas conveying assembly further comprises a first filter provided between the first gas storage tank and the first gas joint, and the second gas conveying assembly further comprises a second filter provided between the second gas storage tank and the second gas joint.

8. The gas circulation device according to claim 1, **characterized in that** the intake assembly is provided with a quick-plug type flange at its intake end and is connected to a gas source via the quick-plug type flange.

9. The gas circulation device according to claim 1, **characterized in that** the intake assembly comprises a first intake pipe connected to the first gas storage tank and a second intake pipe connected to the second gas storage tank, and the pressure regulation structure is a pressure relief valve provided on the first intake pipe.

10. The gas circulation device according to claim 1, **characterized in that** the intake assembly includes a first intake pipe connected to the first gas storage tank and a second intake pipe connected to the second gas storage tank, and the pressure regulation structure is a pressure booster valve provided on the second intake pipe.

11. A battery quiescence device, **characterized by** comprising:
- the gas circulation device according to any one of claims 1 to 10; and
- a quiescent chamber, where the first gas conveying assembly and the second gas conveying assembly are both connected to the quiescent chamber.
